# EUROPEAN PATENT SPECIFICATION

(11) **EP 2 031 599 B1**
(45) Date of publication and mention of the grant of the patent: **13.07.2011**
(21) Application number: 08162480.1
(22) Date of filing: 15.08.2008
(51) Int. Cl.: G21C 3/33, G21C 3/344

(54) **Debris shield for upper tie plate in a nuclear fuel bundle and method for filtering debris**
Ablagerungsfilter für die obere Bindeplatte eines Atombrennstoffbündels und Verfahren zum Filtern von Ablagerungen
Protection de débris pour plaque de palier supérieur dans une grappe de carburant nucléaire et procédé de filtrage des débris

(30) Priority: 31.08.2007 US 848414
(43) Date of publication of application: 04.03.2009
(73) Proprietor: Global Nuclear Fuel-Americas, LLC, Wilmington, North Carolina 28401 (US)
(72) Inventor: De Filippis, Michael S., Wilmington, NC 28411 (US); Luciano, Gerald A., Wilmington, NC 28411 (US); Smith, David, Leland, NC 28451 (US); Kiernan, Michael T., Wilmington, NC 28403 (US); Clark, Carlton W., Wilmington, NC 28404 (US); Langston, Andrew K., Wilmington, NC 28412 (US)
(74) Representative: Gray, Thomas

(56) References cited:
- EP-A- 0 372 214
- EP-A- 1 868 208
- US-A- 4 919 883
- US-A1- 2004 196 953
- US-A1- 2007 183 556

## Description

### BACKGROUND OF THE INVENTION

The present invention relates to a nuclear fuel assembly including a fuel bundle and a tie plate for supporting the fuel assembly and, particularly, relates to a debris shield that is releasably attached to or permanently integrated with an Upper Tie Plate (UTP) of the fuel assembly.

In a nuclear fuel assembly, liquid coolant/moderator flows into the assembly thru the bottom and exits as a water and steam mixture from the top. The core of a boiling water nuclear reactor (BWR) includes a plurality of fuel assemblies arranged in vertical side-by-side relation, each containing a bundle of fuel rods. The fuel assemblies include a fuel bundle and a housing formed by a hollow metal channel. The fuel bundle includes an array of parallel fuel rods, water rods and one or more tie plates, spacers, and finger springs, that support the rods in the bundle. Generally, a fuel bundle includes an upper tie plate near the top of the bundle and a lower tie plate at the bottom of the bundle.

Debris may fall through a conventional upper tie-plate and become lodged within the fuel bundle where the debris may cause fuel rod fretting during normal BWR operating conditions. Fretting is potentially damaging to the fuel rods, resulting in what is typically known in the business, as a "leaker".

Conventional efforts to address debris falling down into a fuel assembly typically focus on the prevention of debris within the coolant itself and coolant flow passages, prior to coolant flow entering into the fuel assemblies within the core. Conventional efforts typically involve administrative controls regarding the treatment of coolant flow passages and handling of fuel assemblies such that debris does not enter the passages of the fuel assemblies. These controls are designed to alleviate the sources of debris such that debris does not fall down into fuel assemblies. Nevertheless, there is a risk that debris will fall into a fuel assembly, especially while the coolant flow stops and the reactor core is open, or when service work is preformed on the core. There is a long felt need for procedures and special devices to ensure that debris does not fall into fuel assemblies from above, especially during refuel operations, fuel inspections and when the coolant is in a reverse coolant flow pattern.

### BRIEF DESCRIPTION OF THE INVENTION

The present invention provides a nuclear reactor fuel assembly comprising: a fuel bundle including an array of fuel rods mounted to an upper tie plate and housed within a channel, characterised in that a debris shield is disposed in a slot in a frame of the upper tie plate and above the fuel rods, wherein the debris shield has a surface at least co-extensive with an at least partially open area of the upper tie plate.

Further, the present invention provides a method to prevent debris falling into a nuclear reactor fuel assembly including a bundle of fuel rods mounted below an upper tie plate and housed in a channel, the method comprising: inserting a debris shield in a slot in a frame of the upper tie plate; maintaining the shield in the upper tie plate and above the fuel rods, while the fuel assembly is in an operating nuclear reactor core; flowing coolant through the bundle and the debris shield during operation of the nuclear reactor core, and capturing or deflecting debris falling in the fuel assembly with the debris shield.

### BRIEF DESCRIPTION OF THE DRAWINGS

FIGURE 1 is a side, partially open view of a conventional fuel assembly, with a portion of the channel, fuel rods and water rods cut away.

FIGURE 2 is a perspective view of the top and sides of a first embodiment of an upper tie plate having an internal debris shield which can be a removable unit or attached as a permanent integrated structure within the upper tie plate to prevent debris from falling into the fuel assembly.

FIGURE 3 is a side view showing the first embodiment of the upper tie plate and debris shield shown in a cross-section taken along line 3-3 of Figure 2.

FIGURE 4 is a perspective view of the top and sides of a second embodiment of an upper tie plate having a removable internal debris shield, wherein the debris shield which can be a removable unit or attached as a permanent integrated structure within the upper tie plate, and the shield is shown extending partially out of the upper tie plate.

FIGURE 5 is a perspective view of the top and sides of the second embodiment of an upper tie plate having a removable internal debris shield, wherein the shield is fully inserted in the upper tie plate.

FIGURE 6 is a side view showing the second embodiment of the upper tie plate and debris shield.

FIGURE 7 is a top-down view of the second embodiment of the upper tie plate, without debris shield.

FIGURE 8 is a top-down view of the debris shield of the second embodiment of the upper tie plate.

FIGURE 9 is a perspective view of the top and sides of a third embodiment of an upper tie plate having a debris shield which can be a removable unit or attached as a permanent integrated structure within the upper tie plate, wherein the shield is shown out of the upper tie plate. The arrow shows the insertion direction of the shield into the plate.

FIGURE 10 is a perspective view of the top and sides of the third embodiment of an upper tie plate having a removable internal debris shield, wherein the shield is shown properly aligned and seated in the upper tie plate's cavity.

FIGURE 11 is a side view showing the third embodiment of the upper tie plate and the debris shield is fully seated in and attached to the upper tie plate.

FIGURE 12 is a top-down view of the debris shield of the third embodiment of the upper tie plate with the debris shield fully seated and properly aligned for the insertion of the fuel rod's upper end plugs that aid to maintain the debris shield within the upper tie plate during core operations.

FIGURE 13 is a bottom-up view of the debris shield of the third embodiment of the upper tie plate with debris shield showing proper alignment of the debris shield prior to the insertion of the fuel rod's upper end plugs within the upper tie plate

### DETAILED DESCRIPTION OF THE INVENTION

Debris shields are disclosed herein that mitigate the entry of foreign material into the top of a fuel assembly. The debris shields deflect, catch or remove foreign particles introduced into the top of the fuel assembly. By preventing the entry of foreign particles into the fuel assembly, the possibility of a fuel rod fretting failure is substantially reduced. The debris shield may be a removable unit from the upper tie plate or a permanently integrated structure in the upper tie plate. Preventing debris falling into the fuel bundle is expected to assure the expected operational life of the fuel assembly by reducing the risk of fuel rod failure and premature discharge from the reactor core.

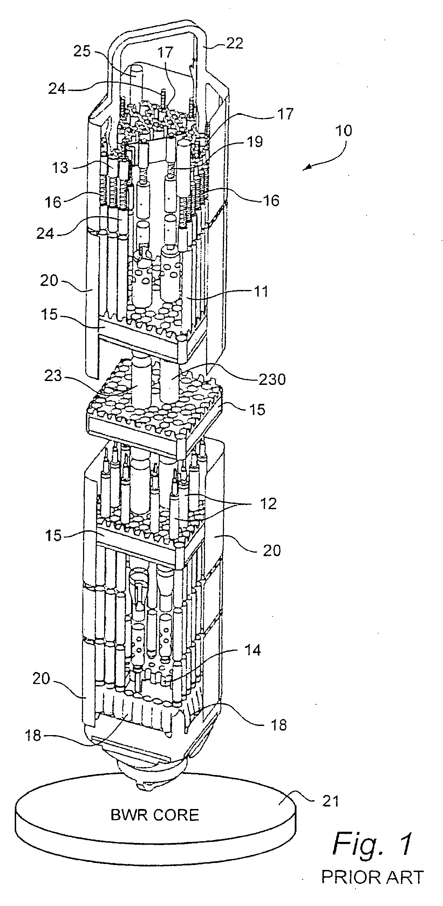

FIGURE 1 is a side view showing in cross-section of a conventional fuel assembly 10 shaped generally as a vertical column with a square cross-section. The reactor core 21 includes many fuel assemblies arranged side by side in a predefined array. The assembly typically includes, for example, an array of full-length fuel rods 11 and part-length fuel rods 12 arranged in parallel. The fuel rods are supported by an upper tie plate 13, a lower tie plate 14, and one or more spacers 15 arranged at locations along the length of the fuel rods. One or more water rods 23, 230 typically extend through the center of the array of fuel rods and are attached to the upper tie plate by an end plug 19. The fuel bundle comprises the fuel rods 11, 12, water rods 23, 230, tie plates 13, 14, tie rods 24, spacers 15, finger springs 18, and a channel 20.

Fuel rod expansion springs 16 extend from the upper end plug of the full-length fuel rods 11 and tie rods 24 to the under side of the upper tie plate 13. Hex nuts 17 secure to a threaded end of the tie rods 24. The rods extend through the upper tie plate and the opposite end of each rod is secured to the lower tie plate 14 of the fuel assembly 10. The lower tie plate 14 includes finger springs 18 on the outer sidewalls of the lower tie plate 14 that engage a channel 20 that provides a hollow housing for the fuel bundle 10.

The channel 20 is typically an elongated hollow tube, rectangular in cross-section and having a length that covers fuel rods in the fuel assembly 10. Channel posts 25 on opposite corners of the upper tie plate 13 provide guides to align the channel onto the fuel bundle 10. A channel fastener clip secures the channel 20 to the threaded channel posts 26. Generally, a U-shaped lifting handle 22 is attached as part of the upper tie plate 13. The handle 22 may be used to raise and lower the fuel assembly 10 into a reactor core 21 or to otherwise move the assembly from the core.

Debris may enter the top of the fuel bundle 10 especially during non-operating or operating conditions such as, refuel, new fuel receipt, transport to core, when the coolant flow stops flowing upward through the core, and when moderator flow may be stagnate or reversed. Debris falling into the top of the fuel bundle may become lodged in the tie plate, spacer bracket, between the rods or between a channel wall and a rod. The crevices in the fuel bundle can trap the debris in the bundle. The debris may fall through a conventional upper tie plate 13 (fig. 1) and become lodged within a location inside the fuel bundle assembly 10 where it could cause fuel rod fretting during BWR operating conditions.

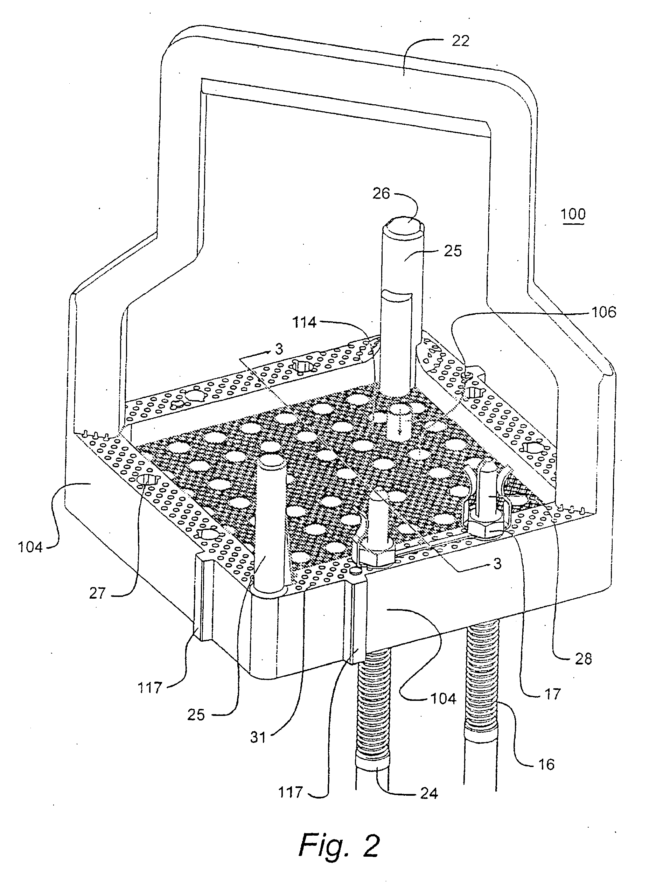

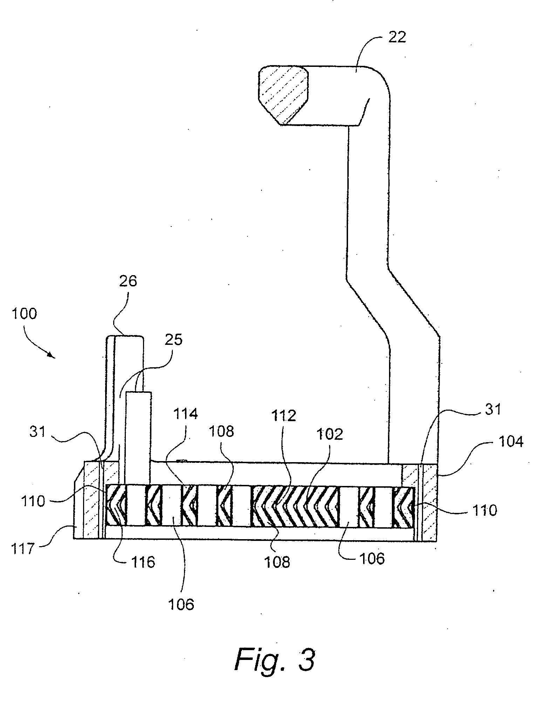

FIGURES 2 and 3 show an upper tie plate assembly 100 having an internal debris shield 102 (Fig. 2) that may be a removable unit or a permanent integrated structure in the upper tie plate. The shield 102 may be mounted to or integral within a horizontal support frame 104 of the assembly. An array of cylindrical pin supports 106 are provided by and within the debris shield. These pin supports 106 provide structural support for the bundle, e.g., the threaded tie rods 24 and expansion springs 16 of fuel rods and possibly water rods 23, 230. The structural support for the bundle provided by the debris shield may render unnecessary a separate array of pin supports in the upper tie plate.

The debris shield 102 fills the area enclosed by the frame 104 of the upper tie plate. The debris shield may or may not be integral with the frame, and may or may not be removable from the frame. The debris shield 102 is porous and filters debris from the fluid flow through the fuel assembly 10. Coolant flow through the debris shield preferably without substantial pressure loss across the debris shield 102.

Flow passages 108 through the debris shield 102 have an axis or axes that are preferably obtuse to a vertical axis of the fuel assembly 10. By way of example, the passages through the debris shield 102 slant in a first direction in the upper half of the shield and slant in a second direction in the lower half of the shield, with a corner 116 formed between the two halves. The slanting passages of the debris shield 102 blocks light passing vertically through the shield. Due to the slanting of the passages 108 in the debris shield 102, it is not possible to look through the shield. The view is blocked because the obtuse passages 108 in the debris shield prevent a top-down line-of-sight view through the upper tie plate assembly 100.

In the example shown in Figures 2 and 3, the shield 102 is an arrangement of angled metal strips arranged side-by-side to form a chevron pattern in cross-section 112 that is generally perpendicular to the fuel bundle 10. The passages 108 are formed between the side-by-side strips. Alternatively, the debris shield 102 may be formed of a porous material, such as a wire or fabric mesh, sponge, grid, array of crossing bars or slats, or other matrix material. The debris shield 102 is generally porous flat plate having perimeter edges 110 that abut the interior surfaces of the frame 104 of the upper tie plate assembly 100.

The debris shield 102 may remain in the fuel assembly 10 during operation of the nuclear reactor core 21. The debris shield 102 preferably has a porosity, open mesh or matrix structure that allows coolant, especially emergency coolant, to flow down through the debris shield without substantial flow resistance. The porous, chevron, mesh or matrix structure of the debris shield 102 blocks the passage of debris. The debris shield serves as a filter that allows passage of fluids, such as coolant, and blocks the passage of particulates. Preferably the debris shield should have a pore size that minimizes the size of the debris without imposing a significant fluid pressure drop across the debris shield 102.

The debris shield 102 filters and captures debris in the coolant flow, especially debris flowing downward from above the fuel assembly 10 and to the upper tie plate assembly 100. The passages 108 of the debris shield 102 are too narrow to allow larger debris particles to enter the passages. Larger debris particles are captured on an upper surface 114 of the debris shield 102. Smaller debris particles may enter the passages of the debris shield and become lodged in the corners and crevices 116 of the debris shield such that they do not flow down below the upper tie plate assembly 100 and into the fuel assembly 10. The frame may be porous, e.g., have small vertical openings 31 to allow fluid to pass through the frame and block passage of debris. The openings in the frame increase the effective flow area of passages through the upper tie plate 100 and thereby compensate or offset any flow restrictions due to the debris shield 102. Datum points 117 attached to the support frame 104 center the channel with the upper tie plate and are used during fabrication to square the upper tie plate 100 to the fuel rods.

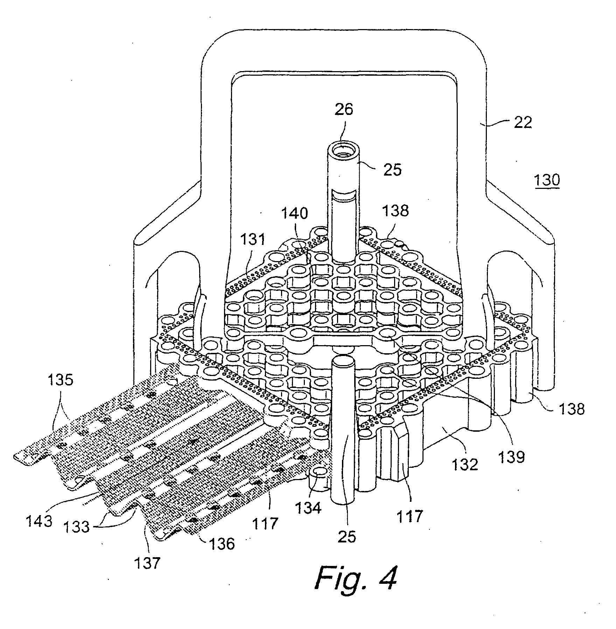

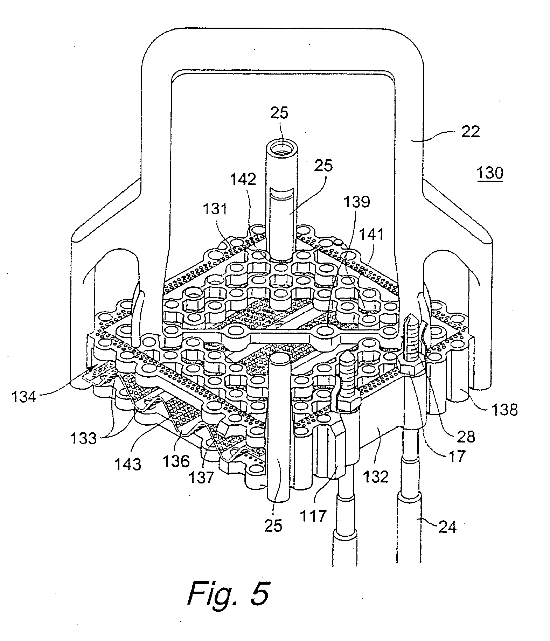

FIGURES 4 and 5 are perspective views of the side and top of an alternative upper tie plate assembly 130 having a horizontal frame 132 with a horizontal slot 134 to receive a debris shield 136 that can be either a removable unit, or it can be attached as a permanent integrated structure within the upper tie plate. The shield is partially removed from the frame in Figure 4. During operation the shield 136 is fully inserted into the slot 134 and enclosed by the frame 132, as is shown in Figure 5.

The upper tie plate assembly 130 includes a upper tie plate handle 22 that is attached or integral with the frame. The frame 132 may include a rectangular outer support wall structure having hollow ribs 138 to receive rod end couplings, e.g., threaded pins of tie rods and provides backing for the expansion springs of fuel rods. The frame may be porous, e.g., have small vertical openings 131 to allow fluid to pass through the frame and block passage of debris. The openings in the frame increase the effective flow area of passages through the upper tie plate 130 and thereby compensate or offset any flow restrictions due to the debris shield 136. Datum points 117 attached to the support frame 132 center the channel with the upper tie plate and are used during fabrication to square the upper tie plate 130 to the fuel rods.

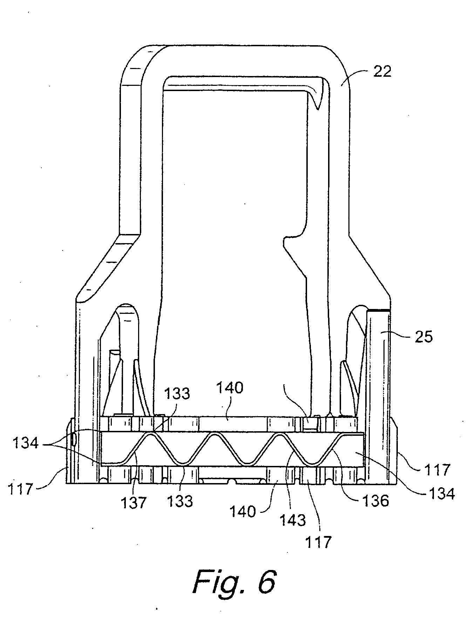

FIGURE 6 is a side view of the upper tie plate assembly 130,having a horizontal slot 134 and the debris shield plate 136 in the slot. The debris shield 136 may have a wavy cross-sectional shape that results in openings in the shield that slant 143 with respect to the vertical axis of the fuel bundle 10. The slant 143 in the opening is advantageous in blocking debris. The wavy shape of the debris shield 136 also assists in securing the debris shield in the slot 134 by causing the upper ridges and lower grooves 133 of the debris shield 136 to be biased against the upper and lower surfaces of the slot 134.

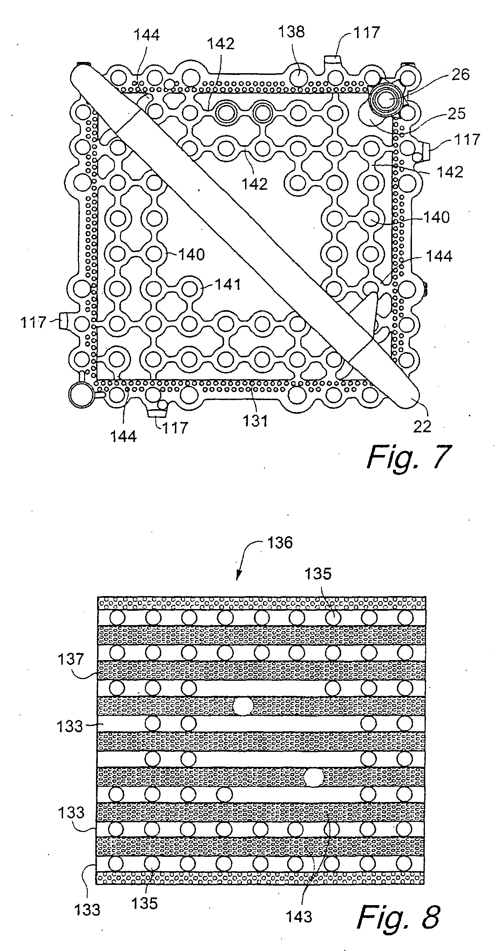

FIGURE 7 is a top-down view of the upper tie plate assembly 130. The matrix 140 of pin supports 141 and interconnecting ribs 142 is clearly shown in Figure 7. The matrix 140 may include upper 156 and lower 158 matrices forming an upper and lower surface of the slot 134 receiving the debris shield 136. The metal matrix 140 of pin supports 141 is mounted to the frame and extends over the area inside of the frame. The metal matrix 140 may be formed by electro discharge machining (EDM) of a metal casting of the upper tie plate assembly. The matrix 140 may be attached to the frame and each other by spokes, rods or a matrix structure (collectively matrix structure). The matrix 140 may be arranged immediately above or below the debris shield 136. The matrix 140 of pin supports 141 includes cylindrical supports 141 to receive rod end couplings, e.g., threaded pins of tie rods and expansion springs of fuel rods and upper end plugs of water rods. The cylindrical supports are interconnected by interconnecting ribs 142 and frame connecting ribs 144. The matrix 140 may include solid metal braces 145 especially near the corners and below the supports for the handle.

FIGURE 8 is a top-down view of the debris shield plate 136. The apertures 135 for the threaded ends 28 of the tie rods 24 and fuel rods 11, 12 are arranged to align with the pin support cylinders 141 in the upper and lower matrices 140 of the upper tie plate. The upper ridges and lower grooves 133 contain the apertures 135 in the debris shield for receiving the threaded ends 28 of tie rods 24, fuel rods 11, 12, water rods 23, 230 and upper end plugs for each type. These apertures 135 will be filled by the upper end plugs, which block debris that might otherwise flow through the apertures. The ridges and grooves 133 may be devoid of coolant flow openings so as to avoid vertically aligned openings that may tend to pass debris particles that would be blocked by the slanted openings 143 on the angled sides 137 of the ridges and grooves 133.

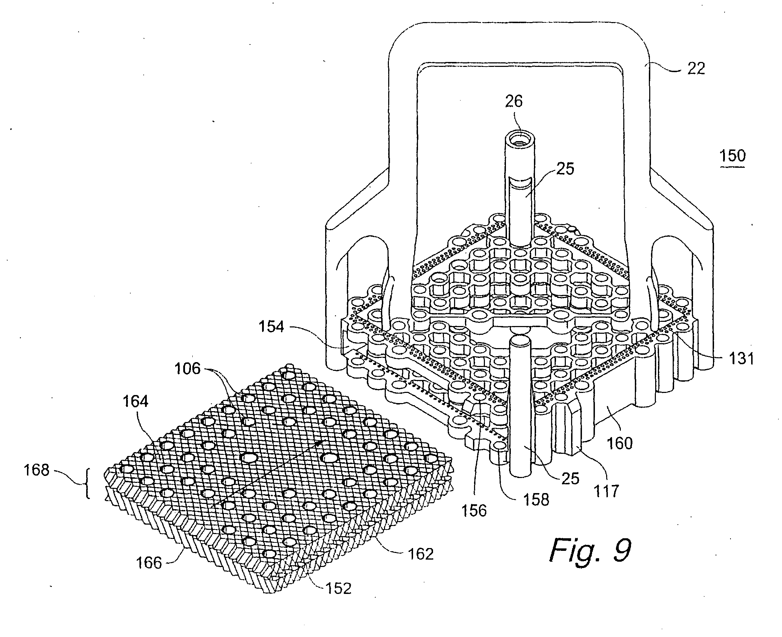

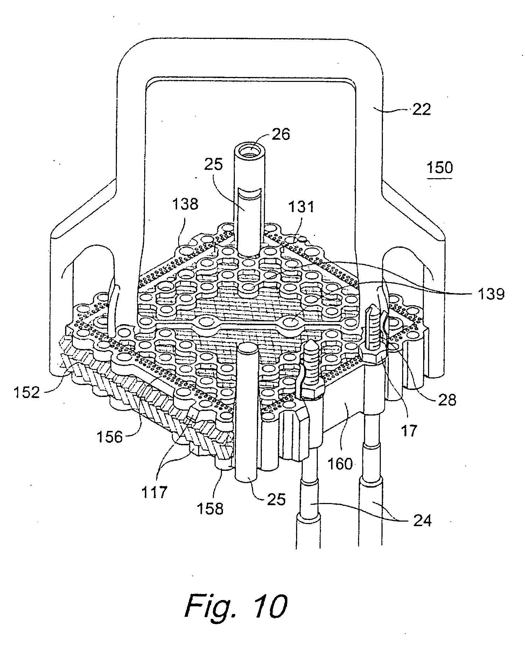

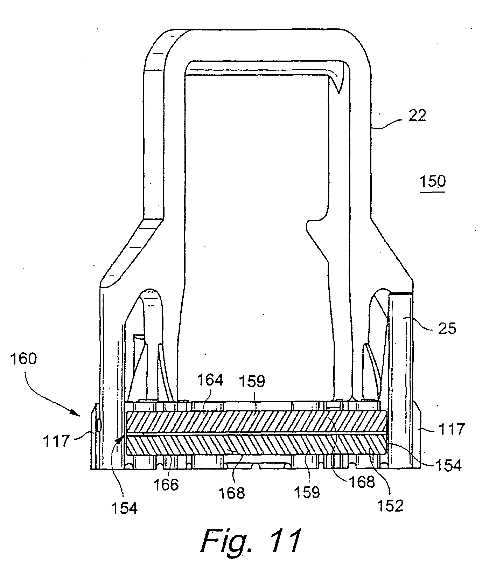

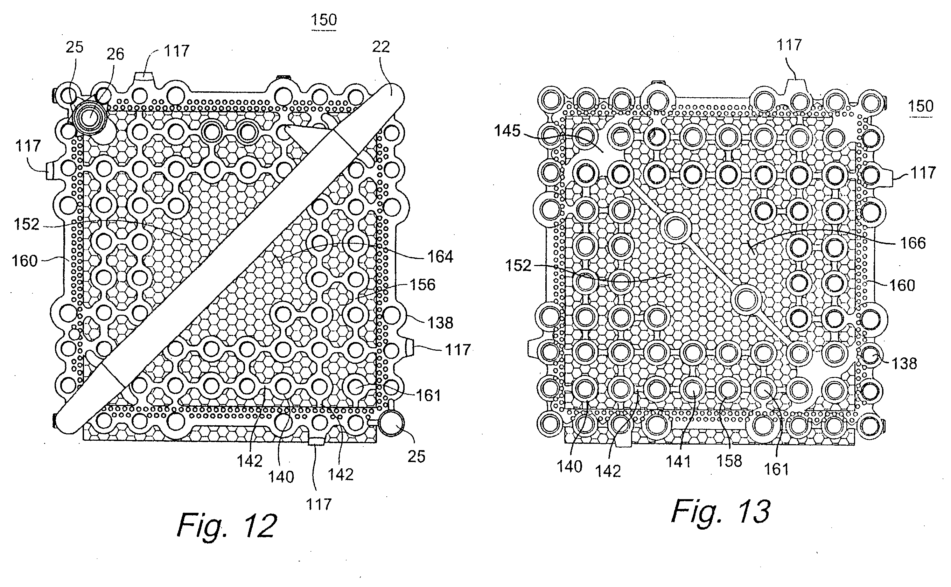

FIGURE 9 shows a third embodiment of an upper tie plate 150 having a removable debris shield 152 that slides in a slot 154 between an upper planar section 156 and a lower planar section 158 of the upper tie plate 150 that may be a removable unit or a permanent integrated structure in the upper tie plate. In Figure 9, the debris shield is shown as being removed from the slot 154 of the upper tie plate. FIGURE 10 shows the debris shield 152 fully inserted and secured within the upper tie plate 150. FIGURE 11 is the side view of the debris filter 152 fully inserted into the upper tie plate cavity 154. FIGURES 12 and 13 show top and bottom views, respectively, of the upper tie plate 150.

A three-sided frame 160 of the upper tie plate 150 holds together the upper and lower planar sections 156, 158. The frame may be porous, e.g., have small vertical openings 131 to allow fluid to pass through the frame and block passage of debris. The openings in the frame increase the effective flow area of passages through the upper tie plate 150 and thereby compensate or offset any flow restrictions due to the debris shield 152. Datum points 117 attached to the support frame 160 center the channel with the upper tie plate and are used during fabrication to square the upper tie plate 150 to the fuel rods. The frame 160 also supports a lifting handle 22 and the channel posts 25. The frame 160 includes upper and lower planar sections 156, 158 that are load bearing structures of the upper tie plate 150, and provide structural support for the debris shield 152, channel 20, tie rod 24 and other components of the fuel assembly. Optionally, a structurally strong debris shield 152 may serve as a load bearing structure and replace one or more of the upper and lower sections 156, 158 and the frame 160. The debris shield 152 includes apertures 161 (Figs. 12 and 13) to receive the fuel rods, for example, and that are aligned with the pin supports 141 of the upper and lower planar sections 156, 158 of the upper tie plate 150.

The debris shield 152 may be generally planar and have edges 162 (fig. 9) that abut the interior walls of the frame 160, and upper and lower surfaces 164, 166 that are adjacent interior surfaces of the upper and lower planer sections 156 and 158 of the upper tie plate. Because of the thickness of the debris shield 152, a slight force may be needed to place the debris shield fully within the cavity of the upper tie plate.

The debris shield 152 may be a honey-combed metallic structure, a wire or fabric mesh, sponge, grid, array of crossing bars or slats, or other matrix that is porous. The material forming the shield should withstand service in a nuclear reactor core. Preferably, the passages through the debris shield are not entirely straight and include at least one bend or curve. Bends and curves in passages of the debris shield tend to trap debris, especially strands of wires and rods. The passages through the debris shield 152 may be numerous to minimize any fluid pressure drop across the debris shield, while maintaining the debris filtering function of the debris shield. Fluid flows through the disjointed passages, but debris is filtered out of the fluid by the debris shield. A characteristic of the debris shield may be that light does not shine through the debris shield because of the bends and curves in passages.

The bends and curves (fig. 11) in the flow passages 159 of the debris shield 152 may be formed by laminating two or more layers 168 of debris shield material, e.g., a honey-combed metallic layer, such that the passages in each layer are not aligned. By way of example, the passages in each layer may be angled, e.g., 5 degrees to 45 degrees, with respect to the axis of the fuel assembly 10. The direction or slope of the passage angles in each layer 164, 166 may be different so that the layers form disjointed passages 159 through the laminated debris shield 152. Alternatively, the debris passages through each layer of the debris shield may be offset with respect to the passages of adjacent layers and gaps between the layers allow fluid to pass through the debris shield with relatively small fluid resistance.

The debris shield 102, 136 and 152 may remain in the fuel assembly 10 during operation of the nuclear reactor core. The debris shield preferably has a porosity that allows coolant, especially emergency coolant, to flow downward through the debris shield without substantial flow resistance. The porosity and disjointed fluid passages of the debris shield blocks the passage of debris. The debris shield serves as a filter that allows passage of fluids, such as cooling fluid, and blocks the passage of particulates. Preferably the debris shield should block the passage of particles of debris material having a pore size that minimizes the size of the debris while maintaining the optimal flow of coolant.

The debris shields 102, 136 and 152 shown in Figures 2 to 13 are exemplary shields. The debris shield 102 shown in Figures 2 and 3 may be configured as a plate, having a chevron porous structure in cross-section, and integral to the upper tie plate. The debris shield 102 is a load bearing structure that includes apertures to receive and support tie rods, fuel rods and end plugs of a fuel bundle. Because of the load bearing debris shield 102, upper and lower planer support structures are not needed. Figures 4 to 8 show a debris shield 136 formed of one or more layers of porous metallic layers. The layers may be have a wavy cross-sectional shape that imparts a slant to the passages in the shield and thereby may improve the filtering function of the shield. The debris shield 136, as shown, is not load bearing and is inserted in a slot of a load bearing frame of the upper tie plate. Figures 9 to 12 shown a debris shield 152 that is a laminated plate having layers and passages that are disjointed and have bends and curves to trap debris. As shown in Figures 9 to 12, the debris shield 152 is non-load bearing and has apertures through which pass tie rods, fuel rods and end plugs that attached to openings in upper and lower planer sections of the upper tie plate. Alternatively, the debris shield 152 may be load bearing and fitted in frame of an upper tie plate as shown in Figures 2 and 3.

The debris shields 102, 136 and 152 block downwardly flowing debris, have relatively little resistive area to emergency cooling flow and allow recirculation of fluid flowing through and around the shield to the top of the bundle during application of the emergency core cooling system. Debris shields having other shapes, compositions and arrangements in the top of a fuel assembly 10 may be fashioned to serve the function of preventing debris falling into a bundle, in substantially the same way of blocking passage of debris falling downward into the bundle while passing coolant, to achieve the result of substantially no debris being introduced in the bundle due to debris falling down past the upper tie plate.

Each of the three embodiments of the debris shield 102, 136 and 152 are suitable for blocking and filtering debris from coolant flow passing through the upper tie plate. The debris shield 102 (first embodiment) may be held in place by, for example, one or more of the following methods: (i) threaded upper end plugs of the tie rods, (ii) the water rods 23, 230, (iii) the full length fuel rods 11 within the bundle assembly, and (iv) a binding force exerted between the cavity opening in the upper tie plate for the debris shield and the debris shield itself. Further, the debris shield 102 may be a removable unit or a permanent integrated structure mounted within the upper tie plate. In addition, the debris shield 102 may be a removable unit or a permanent integrated structure in the upper tie plate and above the fuel rods, wherein the debris shield has a surface at least co-extensive with an open area of the fuel bundle inside the channel.

The debris shields 102, 136 and 152 may be used in a method to prevent debris falling into a nuclear reactor fuel assembly including a bundle of fuel rods mounted below an upper tie plate and housed in a channel, the method comprising: inserting a debris shield which can be either a removable unit, or attached as a permanent integrated structure within the upper tie plate. Similarly, a method has been developed of maintaining the debris shield in the upper tie plate and above the fuel rods, while the fuel assembly is in an operating nuclear reactor core; flowing coolant through the bundle and the debris shield during operation of the nuclear reactor core, and capturing or deflecting debris falling in the fuel assembly with the debris shield. The debris shields 102, 136 and 152 deflect, catch and/or remove foreign materials potentially introduced into the top of the fuel assembly.

The debris shields 102, 136 and 152 may themselves provide structural support for the bundle and thereby render unnecessary a separate array of pin supports in the upper tie plate. Accordingly, the upper tie plate may comprise a rigid debris shield to which is attached the fuel rods, water rods and possible tie rods, wherein the upper tie plate does not include a conventional pin support array.

Coolant flow through the debris shield 102, 136 and 152 is preferably without substantial pressure loss across the debris shield. To reduce the flow resistance of the debris shield, the flow passages may be relatively wide but slanted. The slanting of the passages in the debris shield enhances the ability of the shield to filter debris. Due to slanting, small debris particles cannot flow directly through the shield and will tend to become trapped with in the shield. The view through the debris shield is block because the obtuse passages in the debris shield prevent a top-down line-of-sight view through the upper tie plate assembly.

The debris shield 102, 136 and 152 serves as a filter that allows passage of fluids, such as coolant, and blocks the passage of particulates. The debris shield preferably has a porosity that allows coolant, especially emergency coolant, to flow downward through the debris shield without substantial flow resistance Preferably the debris shield should have a pore size that minimizes the size of the debris without imposing a significant fluid pressure drop across the debris shield. The debris shield 102, 136 and 152may be formed of a porous material, such as a wire or fabric mesh, sponge, grid, array of crossing bars or slats, or other matrix material. The passages of the debris shield are preferably too narrow to allow larger debris particles to enter the passages. Further, the frame of the upper tie plate may be porous, e.g., have small vertical openings to allow fluid to pass through the frame and block passage of debris. The openings in the frame increase the effective flow area of passages through the upper tie plate and thereby compensate or offset any flow restrictions due to the debris shield.

The debris shield 136 may have a wavy cross-sectional shape that results in openings in the shield that slant with respect to the vertical axis of the fuel bundle. The slant in the opening is advantageous in blocking debris. The wavy shape of the debris shield 136 assists in securing the debris shield in the slot by causing the upper ridges and lower grooves of the debris shield to be biased against the upper and lower surfaces of the slot. The upper ridges and lower grooves 133 of the debris shield contain the apertures for receiving the threaded ends of tie rods, fuel rods, water rods and upper end plugs for each type. The debris shield 136 preferably has a porosity in the side sides between the upper and lower most portions of the grooves and ridges that allows coolant, especially emergency coolant, to flow downward through the fuel bundle.

A structurally strong debris shield 152 may serve as a load bearing structure and replace one or more of the upper and lower sections of the frame. The debris shield 152 may be a honey-combed metallic structure, a wire or fabric mesh, sponge, grid, array of crossing bars or slats, or other matrix that is porous. The passages through the debris shield may be numerous to minimize any fluid pressure drop across the debris shield, while maintaining the debris filtering function of the debris shield.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A nuclear reactor fuel assembly (10) comprising:
a fuel bundle including an array of fuel rods (11, 12) mounted to an upper tie plate (13, 100, 130, 150) and housed within a channel (20),
**characterised in that**
a debris shield (102, 136, 152) is disposed in a slot in a frame of the upper tie plate and above the fuel rods, wherein the debris shield has a surface at least co-extensive with an at least partially open area of the upper tie plate.

2. The nuclear reactor fuel assembly as in claim 1, wherein the debris shield (102, 136, 152) is a structural support (106) for a pin of at least one of the fuel rods.

3. The nuclear reactor fuel assembly as in claim 1 or claim 2, wherein the at least partially open area is an open area bordered by a frame (104, 132, 160) of the upper tie plate, wherein the frame has an outer perimeter adjacent the channel.

4. The nuclear reactor fuel assembly as in any one of the preceding claims, wherein the at least partially open area is an open area and is bordered by a generally rectangular frame (104, 132, 160) of the upper tie plate.

5. The nuclear reactor fuel assembly as in claim 4, wherein the frame (104, 132, 160) of the upper tie plate includes at least one hollow rib (138) to receive an upper end of a tie rod (24) of the fuel bundle.

6. The nuclear reactor fuel assembly as in any one of the preceding claims, wherein the partially open area includes a matrix of pin supports (140, 141) and ribs (142, 144) interconnecting the pin supports to each other and to a frame (132) of the upper tie plate, wherein the frame borders the at least partially open area.

7. The nuclear reactor fuel assembly as in claim 6, wherein the matrix of pin supports (140, 141) and ribs (142, 144) includes an upper matrix and a lower matrix, wherein the debris shield (136) is between the upper and lower matrix.

8. A method to prevent debris falling into a nuclear reactor fuel assembly including a bundle of fuel rods mounted below an upper tie plate and housed in a channel, the method comprising:
inserting a debris shield in a slot in a frame of the upper tie plate;
maintaining the shield in the upper tie plate and above the fuel rods, while the fuel assembly is in an operating nuclear reactor core;
flowing coolant through the bundle and the debris shield during operation of the nuclear reactor core, and
capturing or deflecting debris falling in the fuel assembly with the debris shield.

9. The method in claim 8, wherein debris is captured or deflected while coolant flow is stagnant or reversing.

10. The method in claim 8 or claim 9, wherein the debris shield is a porous material having passages through which light aligned with an axis of the fuel assembly does not pass and the capturing or deflecting debris includes trapping the debris in corners and bends of the passages.

11. The method in any one of claims 8 to 10, further comprising supporting a tie rod in an aperture of the debris shield.

## Patentansprüche

1. Kernreaktor-Brennstoffbaugruppe (10), aufweisend:
ein Brennstoffbündel mit einer Anordnung von Brennstäben (11, 12), die an einer oberen Verbindungsplatte (13, 100, 130, 150) montiert und in einem Kanal (20) untergebracht sind,
**dadurch gekennzeichnet, dass**
eine Verunreinigungsabschirmung (102, 136, 152) in einem Schlitz in einem Rahmen der oberen Verbindungsplatte und über den Brennstäben angeordnet ist, wobei die Verunreinigungsabschirmung eine Oberfläche hat, die sich wenigstens mit einem wenigstens teilweise offenen Bereich der oberen Verbindungsplatte deckt.

2. Kernreaktor-Brennstoffbaugruppe nach Anspruch 1, wobei die Verunreinigungsabschirmung (102, 136, 152) eine strukturelle Unterstützung (106) für einen Stift von wenigstens einem der Brennstäbe ist.

3. Kernreaktor-Brennstoffbaugruppe nach Anspruch 1 oder Anspruch 2, wobei der wenigstens teilweise offene Bereich ein durch einen Rahmen (104, 132, 160) der oberen Verbindungsplatte begrenzter offener Bereich ist, wobei der Rahmen einen an den Kanal angrenzenden Außenumfang hat.

4. Kernreaktor-Brennstoffbaugruppe nach einem der vorstehenden Ansprüche, wobei der wenigstens teilweise offene Bereich ein offener Bereich ist und durch einen im Wesentlichen rechteckigen Rahmen (104, 132, 160) der oberen Verbindungsplatte begrenzt ist.

5. Kernreaktor-Brennstoffbaugruppe nach Anspruch 4, wobei der Rahmen (104, 132, 160) der oberen Verbindungsplatte wenigstens eine hohle Rippe (138) enthält, um ein oberes Ende eines Verbindungsstabes (24) des Brennstoffbündels aufzunehmen.

6. Kernreaktor-Brennstoffbaugruppe nach einem der vorstehenden Ansprüche, wobei der teilweise offene Bereich eine Matrix von Stiftunterstützungen (140, 141) und von Rippen (142, 144) enthält, die die Stiftunterstützungen miteinander und mit einem Rahmen (132) der oberen Verbindungsplatte verbinden, wobei der Rahmen den wenigstens teilweise offenen Bereich begrenzt.

7. Kernreaktor-Brennstoffbaugruppe nach Anspruch 6, wobei die Matrix der Stiftunterstützungen (140, 141) und Rippen (142, 144) eine obere Matrix und eine untere Matrix enthält, wobei sich die Verunreinigungsabschirmung (136) zwischen der oberen und unteren Matrix befindet.

8. Verfahren zum Verhindern, dass Verunreinigungen in eine Kernreaktor-Brennstoffbaugruppe mit einem Bündel von Brennstäben fallen, die unter einer oberen Verbindungsplatte montiert und in einem Kanal untergebracht sind, wobei das Verfahren die Schritte aufweist:
Einsetzen einer Verunreinigungsabschirmung in einen Schlitz in einem Rahmen der oberen Verbindungsplatte;
Festhalten der Abschirmung in der oberen Verbindungsplatte und über den Brennstäben, während die Brennstoffbaugruppe sich in einem arbeitenden Kernreaktorkern befindet;
Durchströmen lassen von Kühlmittel durch das Bündel und die Verunreinigungsabschirmung während des Betriebs des Kernreaktorkerns, und
Abfangen oder Ablenken von Verunreinigung, die in die Brennstoffbaugruppe fällt, mittels der Verunreinigungsabschirmung.

9. Verfahren nach Anspruch 8, wobei Verunreinigung abgefangen oder abgelenkt wird, während der Kühlmittelstrom steht oder sich umkehrt.

10. Verfahren nach Anspruch 8 oder Anspruch 9, wobei die Verunreinigungsabschirmung ein poröses Material mit Kanälen ist, durch welche zu einer Achse der Brennstoffbaugruppe ausgerichtetes Licht nicht hindurchtritt und das Abfangen oder Ablenken der Verunreinigung das Erfassen der Verunreinigung in Ecken und Biegungen der Kanäle beinhaltet.

11. Verfahren nach einem der Ansprüche 8 bis 10, das ferner den Schritt der Unterstützung einer Verbindungsstange in einer Öffnung der Verunreinigungsabschirmung aufweist.

## Revendications

1. Assemblage combustible (10) pour réacteur nucléaire, comprenant :
une grappe de combustible composée d'un réseau de crayons (11, 12) de combustible montés sur une plaque support supérieure (13, 100, 130, 150) et logée dans un canal (20),
**caractérisé en ce que**
une barrière (102, 136, 152) d'arrêt de débris est disposée dans une fente d'un cadre de la plaque support supérieure, la barrière d'arrêt de débris ayant une surface au moins de même extension qu'une zone au moins partiellement ouverte de la plaque support supérieure.

2. Assemblage combustible pour réacteur nucléaire selon la revendication 1, dans lequel la barrière (102, 136, 152) d'arrêt de débris est un support structurel (106) pour une aiguille d'au moins un des crayons de combustible.

3. Assemblage combustible pour réacteur nucléaire selon la revendication 1 ou la revendication 2, dans lequel la zone au moins partiellement ouverte est une zone ouverte bordée par un cadre (104, 132, 160) de la plaque support supérieure, le cadre ayant un pourtour extérieur adjacent au canal.

4. Assemblage combustible pour réacteur nucléaire selon l'une quelconque des revendications précédentes, dans lequel la zone au moins partiellement ouverte est une zone ouverte et est bordée par un cadre globalement rectangulaire (104, 132, 160) de la plaque support supérieure.

5. Assemblage combustible pour réacteur nucléaire selon la revendication 4, dans lequel le cadre (104, 132, 160) de la plaque support supérieure comporte au moins une nervure creuse (138) destinée à recevoir une extrémité supérieure d'un tirant (24) de la grappe de combustible.

6. Assemblage combustible pour réacteur nucléaire selon l'une quelconque des revendications précédentes, dans lequel la zone partiellement ouverte comporte une matrice de supports (140, 141) d'aiguilles et de nervures (142, 144) reliant les supports les uns aux autres et à un cadre (132) de la plaque support supérieure, le cadre bordant la zone au moins partiellement ouverte.

7. Assemblage combustible pour réacteur nucléaire selon la revendication 5, dans lequel la matrice de supports (140, 141) d'aiguilles et de nervures (142, 144) comporte une matrice supérieure et une matrice inférieure, la barrière (136) de retenue de débris se trouvant entre les matrices supérieure et inférieure.

8. Procédé pour empêcher des débris de tomber dans un assemblage combustible de réacteur nucléaire comprenant une grappe de crayons de combustible montée sous une plaque support supérieure et logée dans un canal, le procédé comprenant :
l'insertion d'une barrière de retenue de débris dans une fente d'un cadre de la plaque support supérieure ;
le maintien de la barrière dans la plaque support supérieure et au-dessus des crayons de combustible, tandis que l'assemblage combustible se trouve dans le coeur d'un réacteur nucléaire en marche ;
la circulation d'un caloporteur traversant la grappe et la barrière de retenue de débris pendant le fonctionnement du coeur de réacteur nucléaire, et
l'interception ou le détournement, à l'aide de la barrière de retenue de débris, de débris tombant dans l'assemblage combustible.

9. Procédé selon la revendication 8, dans lequel les débris sont interceptés ou détournés pendant que la circulation de caloporteur a cessé ou s'inverse.

10. Procédé selon la revendication 8 ou la revendication 9, dans lequel la barrière de retenue de débris est un matériau poreux ayant des passages à travers lesquels ne passe pas de lumière alignée avec un axe de l'assemblage combustible et l'interception ou le détournement des débris comporte le piégeage des débris dans des angles et des coudes des passages.

11. Procédé selon l'une quelconque des revendications 8 à 10, comprenant en outre le soutien d'un tirant dans un orifice de la barrière de retenue de débris.
